(19) Europäisches Patentamt
European Patent Office
Office européen des brevets

(11) EP 4 249 560 B1

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22164257.2**

(22) Anmeldetag: **25.03.2022**

(51) Internationale Patentklassifikation (IPC):
***C08L 69/00*** *(2006.01)*

(52) Gemeinsame Patentklassifikation (CPC):
(C-Sets verfügbar)
**C08L 69/00** (Forts.)

(54) **POLYCARBONAT/POLYESTER-ZUSAMMENSETZUNG UND BAUTEIL MIT HOHER KRIECHSTROMFESTIGKEIT**

POLYCARBONATE / POLYESTER COMPOSITION AND COMPONENT WITH HIGH RESISTANCE TO LEAKAGE CURRENT

COMPOSITION DE POLYCARBONATE/POLYESTER ET COMPOSANT À HAUTE RÉSISTANCE À LA FISSURATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.09.2023 Patentblatt 2023/39**

(73) Patentinhaber: **Covestro Deutschland AG**
**51373 Leverkusen (DE)**

(72) Erfinder:
- **Nolte, Marius**
  **51065 Köln (DE)**
- **Knaupp, Matthias**
  **40764 Langenfeld (DE)**
- **Hungerland, Tim**
  **51061 Köln (DE)**

(74) Vertreter: **Levpat**
**c/o Covestro AG**
**Gebäude K12**
**51365 Leverkusen (DE)**

(56) Entgegenhaltungen:
**US-A1- 2007 197 722** **US-A1- 2012 231 278**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 69/00, C08L 27/18, C08L 67/02, C08L 69/00, C08K 3/32, C08K 5/103, C08K 5/134, C08K 5/523, C08K 5/5393**

## Beschreibung

Die vorliegende Erfindung betrifft eine flammwidrige Polycarbonat/Polyester-Zusammensetzung, ein Bauteil mit hoher Kriechstromfestigkeit enthaltend die Zusammensetzung sowie die Verwendung eines speziellen Polyesters und eines Flammschutzmittels zur Verbesserung von Kriechstromfestigkeit und Flammwidrigkeit bei Polycarbonat-Zusammensetzungen.

Polycarbonate und Polycarbonat-Blend-Zusammensetzungen werden seit vielen Jahren für zahlreiche Anwendungen wie beispielsweise im Automobilbau, im Elektronikbereich und im Bausektor eingesetzt. Polycarbonat und Polycarbonat-Blends zeichnen sich durch hohe Wärmeformbeständigkeit und hohe Zähigkeit aus. Insbesondere durch die Auswahl und Menge von polymeren Blendpartnern kann das gesamte Eigenschaftsprofil in weiten Bereichen variiert und an die jeweiligen Anforderungen angepasst werden.

Für Elektronikanwendungen sind gute Isolationseigenschaften sowie eine hohe Flammwidrigkeit von hoher Sicherheitsrelevanz. Solche Anforderungen nehmen z.B. auch im Bereich der Elektromobilität immer mehr an Bedeutung zu. Wenn das polymere Material in direkten Kontakt zu stromführenden Teilen wie Leiterbahnen steht, so ist weiterhin eine hohe Kriechstromfestigkeit wichtig. Durch Kriechströme kann ansonsten über die Kunststoffoberfläche eine Ladungsübertragung über weitere Strecken erfolgen, als es bei gleicher Spannung direkt durch die Luft möglich wäre. Das ist selbst bei Materialien der Fall, die eigentlich hohe Isolationseigenschaften aufweisen wie Kunststoffe. Die Neigung zur Kriechstrombildung sollte also möglichst gering sein, um die Gefahr von Kurzschlüssen zu reduzieren und um damit Brände zu vermeiden. Außerdem ermöglicht eine hohe Kriechstromfestigkeit, die Abstände zwischen z.B. elektrischen Leiterbahnen zu reduzieren und damit kleinere Bauteilgrößen zu erreichen oder die Bauteile mit höheren Betriebsspannungen zu betreiben.

Ein Maß für die Kriechstromfestigkeit eines Kunststoffs ist der CTI ("comparative tracking index"). Damit lässt sich ausdrücken, inwieweit die Kunststoffoberfläche durch den Einfluss von Schmutz oder Flüssigkeit beim Anlegen einer elektrischen Spannung die Ausbildung von Kriechströmen ermöglicht. Je höher die Kriechstromfestigkeit, desto besser eignet sich das Material für Bauteile, an denen hohe Spannungen anliegen und/oder die im Einsatz verschmutzen oder mit Feuchtigkeit in Berührung kommen können. Der CTI wird in Volt angegeben und sagt aus, dass bis zu dieser Spannung bei Auftropfen einer bestimmten Menge einer Elektrolytlösung kein deutlicher Kriechstrom auftritt.

Polycarbonat weist im Vergleich zu anderen Polymeren wie beispielsweise Polyethylen nur eine geringe Kriechstromfestigkeit mit einem CTI Wert von etwa 250 V auf. Für manche Hochspannungsanwendungen wie im Bereich der Elektromobilität werden aber CTI Werte von 600 V gefordert. Weiterhin sollen die Materialien für solche Anwendungen eine sehr hohe Flammwidrigkeit nach UL 94 V aufweisen, bevorzugt eine Klassifizierung von VO bei dünnen Wandstärken wie 1,5 mm.

Die Flammwidrigkeit von Polycarbonat und Polycarbonat-Blends wird üblicherweise durch die Zugabe von Flammschutzmitteln verbessert.

US 2007/197722 A1 offenbart eine thermoplastische Formmasse mit verbesserter Schlagfestigkeit und Flammbeständigkeit. Die Zusammensetzung Die Zusammensetzung enthält (a) aromatisches Polycarbonat, (b) thermoplastischen Polyester, (c) halogeniertes Acrylat, (d) einen Schlagzähmodifikator, (e) eine phosphorhaltige Verbindung und (f) fluoriertes Polyolefin.

US 2012/231278 offenbart Zusammensetzungen mit verbesserter Flammwidrigkeit für Extrusionsanwendungen enthaltend aromatisches Polycarbonat, ein Streuadditiv auf Acrylatbasis, bromiertes Flammschutzmittel und phosphorbasiertes Flammschutzmittel.

Allerdings erhöhen manche Flammschutzmittel die Neigung zur Kriechstrombildung, führen also zu einer unerwünschten Absenkung des CTI. Weiterhin werden durch Flammschutzmittel häufig auch die Wärmeformbeständigkeit und die Zähigkeit wie z.B. die Schlagzähigkeit negativ beeinflusst.

EP 3560997 A2 offenbart eine thermoplastische Harzzusammensetzung mit guten Eigenschaften wie hohem CTI umfassend: (A) 100 Gewichtsteile Polycarbonat; (B) 2 Gewichtsteile bis 6 Gewichtsteile eines flammhemmenden Mittels aus einer zyklischen Phosphazenverbindung; (C) 0,1 Gewichtsteile bis 5 Gewichtsteile eines Schlagzähmodifikators; und (D) 1 Gewichtsteil bis 3 Gewichtsteile eines fluorierten Polyolefins.

US 2012/0248384 A1 offenbart Polycarbonatzusammensetzungen, Verfahren und Herstellungsartikel, die zumindest bestimmte Anforderungen an die elektrische Kriechstromfestigkeit erfüllen. Die Zusammensetzungen, Verfahren und Herstellungsartikel, die diese Anforderungen erfüllen, enthalten mindestens ein Polycarbonat, ein Polysiloxanblock-Copolycarbonat und ein Übergangsmetalloxid, z.B. Titandioxid.

Die Zusammenhänge zwischen Brandverhalten (GWFI) und Kriechstromfestigkeit werden in der Veröffentlichung: "Glow wire ignition temperature (GWIT) and comparative tracking index (CTI) of glass fibre filled engineering polymers, blends and flame retarded formulations" (Polymer Degradation and Stability, Volume 96, Issue 12, Dezember 2011, Seiten 2098-2103) behandelt.

Es war weiterhin wünschenswert, Polycarbonat-Zusammensetzungen bereitzustellen, aus denen sich Formkörper herstellen lassen, die sich durch die Kombination von hohem CTI, hoher Flammwidrigkeit, hoher Wärmeformbeständigkeit und Zähigkeit auszeichnen. Insbesondere war es wünschenswert, dass die Formkörper einen CTI von 600 V, vorzugsweise bestimmt nach der im Beispielteil beschriebenen Schnellprüfmethode in Anlehnung an IEC 60112:2009, eine UL 94 V0-Klassifizierung bei 1,5 mm, sowie weiter bevorzugt zusätzlich eine Vicat Erweichungstemperatur gemessen nach DIN ISO 306 (Version von 2013, Verfahren B/120) von mindestens 105 °C sowie keinen Bruch in der Izod Schlagzähigkeitsprüfung nach ISO 180-U (Version von 2019) aufweisen.

Überraschend wurde gefunden, dass eine Zusammensetzung enthaltend

A) 60 bis 93 Gew.-%, bevorzugt 65 bis 90 Gew.-%, besonders bevorzugt 70 bis 90 Gew.-% mindestens eines aromatisches Polycarbonats, Polyestercarbonats oder Mischungen daraus,
B) 2 bis 20 Gew.-%, bevorzugt 3 bis 18 Gew.-%, besonders bevorzugt 4 bis 16 Gew.-% eines Polyesters basierend auf mindestens einer aromatischen oder mindestens einer cycloaliphatischen Dicarbonsäure oder Mischungen daraus und Cyclohexandimethanol und optional mindestens einem weiteren aliphatischen Diol,
C) 1 bis 10 Gew.-%, bevorzugt 2 bis 9 Gew.-%, besonders bevorzugt 3 bis 9 Gew.-% mindestens eines phosphorhaltiges Flammschutzmittels,

die gewünschten Eigenschaften aufweist.

Die Zusammensetzung kann zusätzlich zu den Komponenten A, B und C als Komponente D ein oder mehrere Polymeradditive, Füll- und Verstärkungsstoffe, Farbstoffe, Pigmente, Schlagzähmodifikatoren und/oder von den Komponenten A und B verschiedene Polymere als Blendpartner enthalten, wobei die Menge der Komponente D bevorzugt 0,1 bis 20 Gew.-%, bezogen auf die Zusammensetzung beträgt.

Bevorzugt besteht die Zusammensetzung zu mindestens 90 Gew.-%, weiter bevorzugt zu mindestens 95 Gew.-% aus den Komponenten A bis D. Besonders bevorzugt besteht die Zusammensetzung nur aus den Komponenten A bis D.

Ein weiterer Gegenstand der vorliegenden Erfindung ist die Verwendung von 2 bis 20 Gew.-% eines Polyesters basierend auf einer aromatischen oder cycloaliphatischen Dicarbonsäure oder Mischungen daraus und Cyclohexandimethanol und optional einem weiteren aliphatischen Diol und 1 bis 10 Gew.-% mindestens eines phosphorhaltiges Flammschutzmittels zur Verbesserung des CTI und der Flammwidrigkeit nach UL 94 V von Polycarbonat-Zusammensetzungen, bevorzugt zur Erzielung eines CTI von 600 V vorzugsweise bestimmt nach der im Beispielteil beschriebenen Schnellprüfmethode in Anlehnung an IEC 60112:2009 sowie einer UL 94 V0-Klassifizierung bei einer Probenkörperdicke von 1,5 mm von Polycarbonat-Zusammensetzungen enthaltend 60 bis 93 Gew.-% Polycarbonat.

Aufgrund der guten Eigenschaften der Zusammensetzung eignet sie sich auch zur Herstellung von Bauteilen, die einen geringen Abstand zwischen elektrischen Leiterbahnen aufweisen.

Ein weiterer Gegenstand der vorliegenden Erfindung ist daher ein Bauteil, bevorzugt ein Elektro/Elektronik-Bauteil,

umfassend
einen ersten elektrischen Leiter L1 und einen zweiten elektrischen Leiter L2 in einem ersten Abstand d1 und einem zweiten Abstand d2 zueinander,
welche über ein thermoplastisches Material M, das in direktem Kontakt mit dem ersten elektrischen Leiter und der zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des thermoplastischen Materials M ist und
wobei der Abstand d2 die kürzeste Strecke zwischen dem ersten elektrischen Leiter und dem zweiten elektrischen Leiter durch die Luft ist
wobei d2 so ausgewählt ist, dass bei der jeweiligen Betriebsspannung U für Bauteil ein Überschlag durch die Luft verhindert wird,
wobei d1 bei den nachfolgend aufgelisteten Betriebsspannungen U folgende Werte hat:

$$d1(0V \leq U \leq 250V)\text{: } 1{,}3 \text{ mm bis } < 4{,}0 \text{ mm}$$

$$d1(250 \text{ V} < U \leq 500 \text{ V}) = 2{,}5 \text{ mm bis } < 8{,}0 \text{ mm}$$

$$d1(500 \text{ V} < U \leq 1000 \text{ V}) = 5{,}0 \text{ mm bis } < 16 \text{ mm}$$

und wobei das thermoplastische Material M folgende Komponenten umfasst

A) 60 bis 93 Gew.-% mindestens eines aromatisches Polycarbonats, Polyestercarbonats oder Mischungen

daraus,

B) 2 bis 20 Gew.-% Polyesters basierend auf einer mindestens aromatischen oder mindestens einer cycloaliphatischen Dicarbonsäure oder Mischungen daraus und Cyclohexandimethanol und optional mindestens einem weiteren aliphatischen Diol,

C) 1 bis 10 Gew.-% mindestens eines phosphorhaltiges Flammschutzmittels,

Bevorzugt handelt es sich bei dem Bauteil um eines, das nach ISO 20653:2013 eine Schutzart von IP6K9K, d.h. gegen Berührung, Eindringen von Fremdkörpern und Wasser aufweist. Für solche Bauteile hat d1 bei den nachfolgend aufgelisteten Betriebsspannungen U folgende Werte:

d1(0V $\leq$ U $\leq$ 250V): 1,3 mm bis < 2,5 mm, weiter bevorzugt 1,3 bis < 1,8 mm
d1(250 V < U $\leq$ 500 V) = 2,5 mm bis < 5,0 mm, weiter bevorzugt 2,5 bis < 3,6 mm
d1(500 V < U $\leq$ 1000 V) = 5,0 mm bis < 10,0 mm, weiter bevorzugt 5,0 bis < 7,1 mm

Bevorzugt ist dabei d2 mindestens 1,2 mm, weiter bevorzugt 1,2 bis 10,0 mm. Die Bestimmung des Abstandes, mit dem ein Überschlag durch die Luft verhindert wird, liegt in der Fähigkeit des Fachmanns.

Die als bevorzugt, besonders bevorzugt etc. für die Zusammensetzung genannten Merkmale gelten auch im Hinblick auf die erfindungsgemäße Verwendung und das erfindungsgemäße Bauteil.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (1)

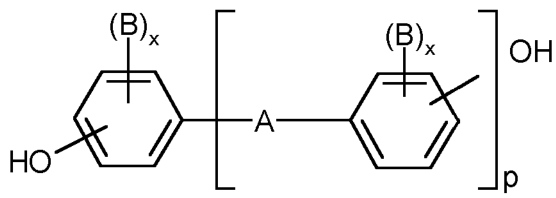

(1),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,

oder ein Rest der Formel (2) oder (3)

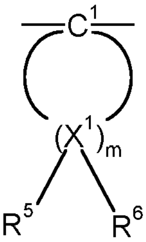

(2)

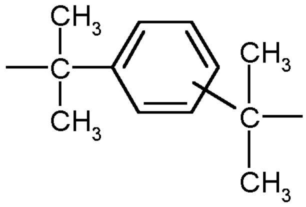

(3)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha,$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$) von bevorzugt 20000 bis 40000 g/mol, weiter bevorzugt 22000 bis 32000 g/mol, besonders bevorzugt 24000 bis 30000 g/mol. gemessen durch GPC (Gelpermeationschromatographie) kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 $\mu$m bis 20 $\mu$m. Konzentration der Lösungen: 0,2 Gew.-%. Flussrate: 1,0 ml/min, Temperatur der Lösungen: 30°C. Verwendung einer UV- und/oder RI-Detektion.

Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar

vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate: die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat, weiter bevorzugt auf Basis von ausschließlich Bisphenol A eingesetzt.

**Komponente B**

Als Komponente B enthält die Zusammensetzung einen Polyester basierend auf mindestens einer aromatischen oder mindestens einer cycloaliphatischen Dicarbonsäure oder Mischungen daraus und Cyclohexandimethanol und optional mindestens einem weiteren aliphatischen Diol. Es können auch Mischungen mehrerer solcher Polyester eingesetzt werden.

Basierend bedeutet dabei, dass der Polyester beispielsweise hergestellt wird durch Polymerisation der genannten Dicarbonsäure oder eines Esters davon mit den genannten Diolen. Der Polyester enthält damit Struktureinheiten abgeleitet von einer aromatischen oder cycloaliphatischen Dicarbonsäure sowie von Cyclohexandimethanol und optional vom einem weiteren aliphatischen Diol.

Geeignete aromatische oder cycloaliphatische Dicarbonsäuren sind beispielsweise Terephthalsäurereste,

Phthalsäure, Isophthalsäure, Naphthalin-2,6-dicarbonsäure, 4,4'-Diphenyldicarbonsäure, 2,5-Furandicarbonsäure und Cyclohexandicarbonsäure,

Es können auch Mischungen verschiedener Diarbonsäuren eingesetzt werden, beispielsweise kann eine Mischung von Terephthalsäure und bis zu 25 Mol.-% einer weiteren Dicarbonsäure eingesetzt werden.

Bevorzugt enthält der Polyester nur Struktureinheiten abgeleitet von Terephthalsäure und Isophthalsäure als Dicarbonsäure, am meisten bevorzugt nur von Terephthalsäure.

Bei der Herstellung der Polyester kann sowohl von Terephthalsäure und den weiteren genannten Säuren ausgegangen werden oder von Alkylestern oder Anhydriden der entsprechenden Säuren.

Als neben Cyclohexandimethanol weiteree aliphatische Diole können beispielsweise Ethylenglykol, 1,3-Butandiol, 1,4-Butandiol, 1,2-Propandiol, 1,3-Propandiol, 1,5 Pentandiol, 1,6 Hexandiol, Isosorbid und Tetramethylcyclobutandiol eingesetzt werden. Bevorzugt ist Ethylenglykol.

In einer weiteren bevorzugten Ausführungsform werden neben Cyclohexandimethanol noch Isosorbid und Ethylengylkol eingesetzt, der Polyester ist also neben der Säurekomponente aus drei Diolkomponenten aufgebaut.

Besonders bevorzugt ist die Komponente B ein Polyester basierend auf Terephthalsäure und einer Mischung aus Cyclohexandimethanol und Ethylenglykol. Weiter bevorzugt ist dabei das molare Verhältnis von Cyclohexandimethanol zu Ethylenglykol im Bereich von 40:60 bis 80:20.

Die Herstellung der Polyester gemäß Komponente B ist bekannt. Sie kann durch Veresterung in Gegenwart eines Katalysators wie beispielsweise einer Zinkverbindung mit anschließender Polykondensation erfolgen. Dabei kann ein Vakuum angelegt werden und die Reaktion kann beispielsweise bei einer Temperatur zwischen 150°C und 300°C durchgeführt werden.

Bei der Polykondensation können weitere Katalysatoren enthaltend Titan, Germanium, Zinn, Aluminium oder Antimon sowie Mischungen aus unterschiedlichen Katalysatoren eingesetzt werden.

Die Reaktion kann kontinuierlich oder diskontinuierlich durchgeführt werden. Die Dosierung der Rohstoffe kann separat erfolgen oder es kann eine Vormischung vorgenommen werden.

Die Polyester gemäß Komponente B weisen ein gewichtsgemitteltes Molekulargewicht $M_w$ von bevorzugt 10 bis 100 kg/mol auf, bspw. gemessen mittels Gelpermeationschromatographie in1,1,1,3,3,3-Hexafluor-2-propanol in einer Konzentration von 1 g/L mit Polymethylmethacrylat als Standard.

Weiterhin weisen die Polyester bevorzugt eine Schmelze-Volumenfließrate (MVR) von 20-80 $cm^3$/10 min, bevorzugt von 30 bis 70 $cm^3$/10 min, jeweils gemessen nach ISO 1133 (2012) bei 270°C und einer Belastung von 5 kg auf.

Die Herstellung eines Polyesters gemäß Komponente B wird beispielsweise in "Modem Polyesters: Chemistry and Technology of Polyesters and Copolyesters", (herausgegeben von J. Scheirs und T.E. Long, John Wiley & Sons, Ltd 2003) und dem dort zitieren Stand der Technik beschrieben.

Ein geeigneter kommerziell verfügbarer Polyester ist beispielsweise Skygreen™ JN100 (SK Chemicals Co., Ltd, Korea). Ein weiterer geeigneter kommerziell verfügbarer Polyester ist beispielsweise ECOZEN™ T120 (SK Chemicals Co., Ltd, Korea).

## Komponente C

Als Komponente C wird in der erfindungsgemäßen Zusammensetzung ein phosphorhaltiges Flammschutzmittel eingesetzt, bevorzugt ausgewählt aus den Gruppen der mono- und oligomeren Phosphor- und Phosphonsäureester und Phosphazene, wobei auch Mischungen von mehreren Verbindungen ausgewählt aus einer oder verschiedenen dieser Gruppen als Flammschutzmittel zum Einsatz kommen können.

Bevorzugte mono- und oligomere Phosphor- bzw. Phosphonsäureester sind Phosphorverbindungen der allgemeinen Formel (4)

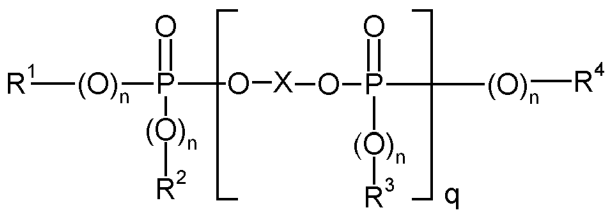

(4)

worin

$R^1$, $R^2$, $R^3$ und $R^4$, unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$

bis $C_6$-Cycloalkyl, $C_6$ bis $C_{20}$-Aryl oder $C_7$ bis $C_{12}$-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
X in der Formel (4) bedeutet bevorzugt einen ein- oder mehrkernigen aromatischen Rest mit 6 bis 30 C-Atomen. Dieser leitet sich bevorzugt von Diphenolen ab.
n in der Formel (4) kann, unabhängig voneinander, 0 oder 1 sein, vorzugsweise ist n gleich 1.
q steht für Werte von 0 bis 30. Bei Einsatz von Mischungen verschiedener Komponenten der Formel (4) können Mischungen vorzugsweise zahlengemittelte q-Werte von 0,3 bis 10, besonders bevorzugt 0,5 bis 10, insbesondere 1,05 bis 1,4, am meisten bevorzugt 1,05 bis 1,2 verwendet werden.
X steht besonders bevorzugt für

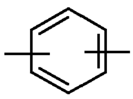 , 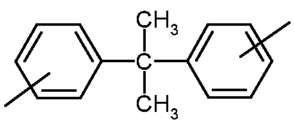 , 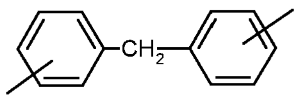 ,

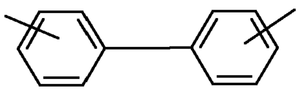

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.
Als erfindungsgemäße Komponente C können Monophosphate (q=O), Oligophosphate (q=1-30) oder Mischungen aus Mono- und Oligophosphaten eingesetzt werden.
Monophosphorverbindungen der Formel (1) sind insbesondere Tributylphosphat, Tris-(2-chlorethyl)-phosphat, Tris-(2,3-dibromprobyl)-phosphat, Tri-(2-ethylhexylphosphat), Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.
Eine besonders bevorzugte Phosphorverbindung gemäß Komponente C ist Bisphenol-A basierendes Oligophosphat gemäß Formel (5).

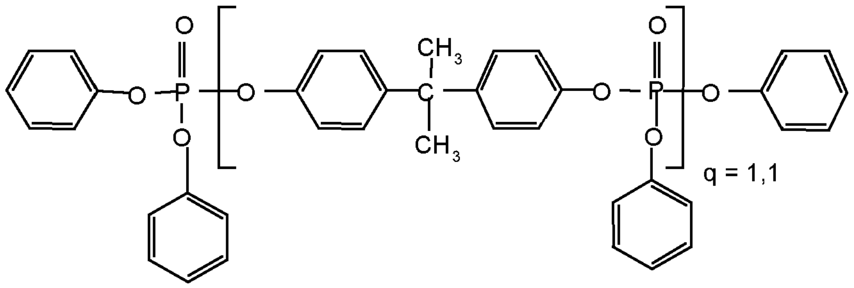

(5)

Die Phosphorverbindungen gemäß Formel (4) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).
Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.
Phosphazene sind Verbindungen der Formeln (6) und (7)

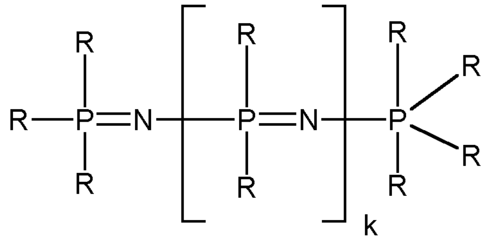

(6),

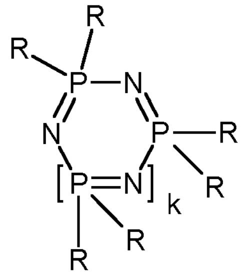

(7),

worin

R jeweils gleich oder verschieden ist und für Amino, jeweils gegebenenfalls halogeniertes, vorzugsweise mit Fluor halogeniertes $C_1$ bis $C_8$-Alkyl, oder $C_1$ bis $C_8$-Alkoxy, jeweils gegebenenfalls durch Alkyl, vorzugsweise $C_1$ bis $C_4$-Alkyl, und/oder Halogen, vorzugsweise Chlor und/oder Brom, substituiertes $C_5$ bis $C_6$-Cycloalkyl, $C_6$ bis $C_{20}$-Aryl, vorzugsweise Phenyl oder Naphthyl, $C_6$ bis $C_{20}$-Aryloxy, vorzugsweise Phenoxy, Naphthyloxy, oder $C_7$ bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (6) und (7) können verschieden sein. Phosphazene und deren Herstellung sind beispielsweise in EP-A 728 811, DE-A 1 961668 und WO 97/40092 beschrieben.

**Komponente D**

Als Komponente D können in der Zusammensetzung optional ein oder mehrere Vertreter ausgewählt aus der Gruppe bestehend aus Polymeradditiven und polymeren Blendpartnern enthalten sein.

Die Polymeradditive bzw. polymeren Blendpartner sind bevorzugt ausgewählt aus der Gruppe bestehend aus Antidrippingmitteln, Flammschutzsynergisten, Rauchinhibitoren, Gleit- und Entformungsmitteln, Nukleiermitteln, Antistatika, Leitfähigkeitsadditiven, Stabilisatoren, Fließfähigkeitspromotoren, Füll- und Verstärkungsstoffen, Phasenverträglichkeitsvermittlern, Schlagzähigkeitsmodifikatoren, weiteren von den Komponenten A und B verschiedenen polymeren Bestandteilen (beispielsweise funktionelle Blendpartnersowie Farbstoffen und Pigmenten.

Beispiele für Schlagzähmodifikatoren sind: Pfropfpolymerisate mit Kern-Schale-Struktur und einer Pfropfgrundlage enthaltend Polybutadienkautschuk wie ABS und MBS, mit einer Pfropfgrundlage enthaltend Acrylatkautschuk oder Silikonkautschuk oder mit einer Silikonacrylatkautschuk-Pfropfgrundlage wie z. B. die Metablen™-Typen von Mitsubishi Rayon Co., Ltd.; Olefin-AcrylatCopolymere wie z. B. Elvaloy™-Typen von DuPont oder Paraloid™-Typen von Dow;

In bevorzugter Ausführungsform wird als Komponente D mindestens ein Polymeradditiv ausgewählt aus der Gruppe bestehend aus Gleit- und Entformungsmitteln und Stabilisatoren eingesetzt.

In bevorzugter Ausführungsform wird als Stabilisator mindestens ein Vertreter ausgewählt aus der Gruppe bestehend aus sterisch gehinderten Phenolen, organischen Phosphiten, Phosphoriger Säure und organischen oder anorganischen Brönstedt-Säuren eingesetzt.

Als Gleit- und Entformungsmittel werden in bevorzugter Ausführungsform Fettsäureester, besonders bevorzugt Fettsäureester des Pentaerythrits oder Glycerins, eingesetzt.

In einer weiteren bevorzugten Ausführungsform enthält die Komponente D mindestens ein Pfropfpolymerisat mit Kern-Schale-Struktur und/oder ein kautschukfreies Vinyl(co)polymerisat, weiter bevorzugt in einer Menge von zusammen 1 bis 10 Gew.-%, bezogen auf die Zusammensetzung enthaltend die Komponenten A, B, C und D.

Besonders bevorzugt werden Pfropfpolymerisate mit Kern-Schale-Struktur und einer Pfropfgrundlage enthaltend Polybutadienkautschuk eingesetzt.
Als kautschukfreies Vinyl(co)polymerisat wird besonders bevorzugt ein Styrol-Acrylnitril Copolymer eingesetzt.
Die Menge und die Art der Komponenten D muss selbstverständlich so ausgewählt werden, dass die Flammwidrigkeit und der CTI nicht signifikant verschlechtert werden.

**Herstellung einer Formmasse aus der Zusammensetzung**

Aus der Zusammensetzung enthaltend die erfindungsgemäßen Komponenten A, B und C sowie optional D kann eine thermoplastische Formmasse hergestellt werden.
Die thermoplastische Formmasse kann beispielsweise hergestellt werden, indem man die jeweiligen Bestandteile der Zusammensetzung in bekannter Weise vermischt und bei Temperaturen von bevorzugt 200°C bis 320°C, besonders bevorzugt bei 240°C bis 300°C, ganz besonders bevorzugt bei 260°C bis 290°C in üblichen Aggregaten wie beispielsweise Innenknetern, Extrudern und Doppelwellenschnecken schmelzcompoundiert und schmelzextrudiert.
Dieser Prozess wird im Rahmen dieser Anmeldung allgemein als Compoundieren bezeichnet.
Unter Formmasse wird also das Produkt verstanden, das erhaltend wird, wenn die Bestandteile der Zusammensetzung schmelzcompoundiert und schmelzextrudiert werden.
Die Vermischung der einzelnen Bestandteile der Zusammensetzung kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.
Die Formmassen können zur Herstellung von Formkörpern verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die Formmassen zur Verarbeitung in Extrusions-, Blasform- und Tiefziehverfahren.
Es ist auch möglich, die Bestandteile der Zusammensetzungen direkt in den Förderextruder einer Spritzgussmaschine zu dosieren, die Formmasse dabei in dem Förderextruder herzustellen und durch entsprechenden Austrag der Formmasse in eine Spritzgussform direkt zu Formkörper zu verarbeiten (Compoundierungs- oder Reaktivcompoundierungsspritzguss).
Ein weiterer Gegenstand der vorliegenden Erfindung betrifft somit die Verwendung einer erfindungsgemäßen Zusammensetzung oder einer Formmasse zur Herstellung von Formkörpern, sowie ferner auch einen Formkörper, der aus einer erfindungsgemäßen Zusammensetzung oder aus einer Formmasse erhältlich ist oder eine solche Formmasse enthält. Ein Formteil im erfindungsgemäßen Sinne kann auch eine Isolationsschicht in einem elektrischen Bauteil wie einem Transistor sein. Insbesondere handelt es sich bei dem Formkörper um das oben beschriebene Bauteil, das weiter bevorzugt ein Elektro/Elektronik-Bauteil ist.
Bei dem Bauteil handelt es sich bevorzugt um ein Teil eines (Hoch-)Spannungsschalters, (Hoch-)Spannungswechselrichters, Relais, elektronischen Verbinders, elektrischen Verbinders, Schutzschalters, einer Photovoltaikanlage, eines elektrischen Motors, eines Kühlkörpers, eines USB-Steckers, eines Ladegerätes oder Ladesteckers für elektrische Fahrzeuge, eines Elektroanschlusskastens, eines Smart Meter Gehäuses, eines Miniaturtrennschalters oder einer Stromsammelschiene. Es ist ebenso möglich, dass das Bauteil das gesamte Element ist und nicht nur ein Teil davon.
Ein erfindungsgemäßes Bauteil kann beispielsweise im Spritzguss mit Überspritzen von metallischen Leiterbahnen hergestellt werden. Dabei werden metallische Leiterbahnen vorkonfektioniert in der Kavität des Spritzgusswerkzeugs fixiert. Die Leiterbahnen werden nach Schließen des Werkzeugs unter hohem Druck mit Polymerschmelze überflutet, wodurch diese im erkalteten Zustand einen Verbund erzeugen. Nach dem Erstarren und Entformen kann das fertige Bauteil genutzt werden.
Eine Alternative ist der integrierte Kunststoff-Metall-Spritzguss (IKMS). Dabei wird das fertige Bauteil in zwei Schritten hergestellt. Im ersten Schritt wird die Kunststoffkomponente mit den später zu füllenden Leiterbahnen hergestellt. Anschließend wird das fertige Kunststoffbauteil in eine zweite Kavität umgesetzt und mit Lot gefüllt, dieses stellt im erstarrten Zustand die Leiterbahnen dar.
Eine weitere Alternative ist das nachträgliche Verbinden eines Spritzgussbauteils mit den Leiterbahnen, d.h. die Kunststoffkomponente wird im Spritzguss hergestellt und in einem weiteren Schritt mit dem Leiter zusammengebaut. Dabei kann die spritzgegossene Komponente über einen weiteren Energieeintrag im Zusammenbau verbunden werden. Dafür gibt es mehrere Methoden, so kann der metallische Leiter stark erhitzt werden, so dass dieser in die Kunststoffkomponente hineingepresst werden kann. Man kann den Leiter aber auch direkt mittels Laserschweißen mit dem Kunststoffbauteil verbinden.

**Beispiele**

**Komponente A-1:**

Lineares Polycarbonat auf Basis Bisphenol-A mit einem gewichtsgemittelten Molekulargewicht $M_W$ von 26000 g/mol (bestimmt durch GPC in Methylenchlorid mit Polycarbonat auf Basis von Bisphenol A als Standard).

**Komponente A-2:**

Lineares Polycarbonat auf Basis Bisphenol-A mit einem gewichtsgemittelten Molekulargewicht $M_W$ von 24000 g/mol (bestimmt durch GPC in Methylenchlorid mit Polycarbonat auf Basis von Bisphenol A als Standard).

**Komponente B**

Skygreen™ JN100 (SK Chemicals Co., Ltd, Korea ): Co-Polyester basierend auf Terephthalsäure, Cyclohexandimethanol, Ethylenglycol und Diethylenglycol in einem molaren Verhältnis von 44,4 : 30,7 : 23,7 : 1,1 mit einem gewichtsgemittelten Molekulargewicht $M_W$ von 46000 g/mol (bestimmt durch GPC in Hexafluorisopropanol mit Polymethylmethacrylat als Standard) und einer Schmelze-Volumen-Fließrate (MVR) von 51 $cm^3$/[10 min], gemessen nach ISO 1133 (Version von 2012) bei einer Temperatur von 270 °C und einer Belastung von 5 kg.

**Komponente C**

Bisphenol-A basierendes Oligophosphat gemäß folgender Struktur (Chemtura Manufacturing UK Limited)

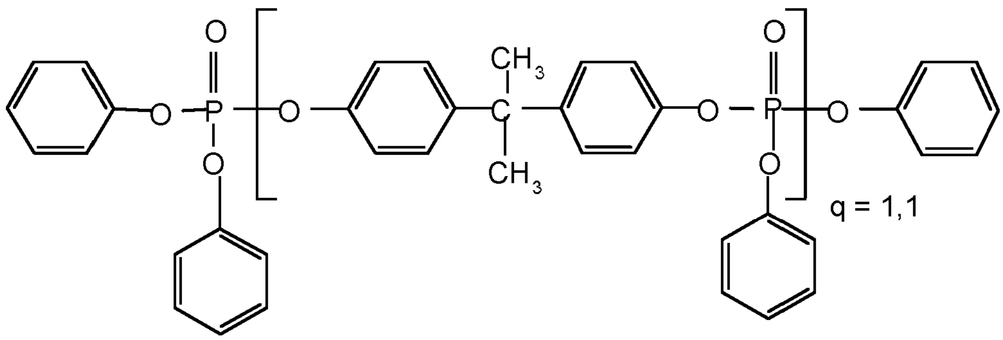

q = 1,1

**Komponente D-1**

Pentaerythrittetrastearat als Entformungsmittel, Cognis Oleochemicals GmbH, Deutschland

**Komponente D-2**

Dimeres Phosphonit Irgafos™ P-EPQ, Tetrakis(2,4-di-tert-butylphenyl)-1,1-biphenyl-4,4'-diylbisphosphonit, BASF (Deutschland)

**Komponente D-3**

Sterisch gehindertes Phenol Irganox™ 1076, Octadecyl-3-[3,5-di-tert-butyl-4-hydroxyphenyl]propionat], BASF (Deutschland)

**Komponente D-4**

Cycolac™ INP449: Polytetrafluoroethylen (PTFE) Präparat der Firma Sabic bestehend aus 50 Gew.-% PTFE enthalten in einer SAN-Copolymermatrix.

**Komponente D-5**

Phosphorige Säure, $H_3PO_3$, Sigma-Aldrich Chemie GmbH, Deutschland

## Herstellung und Prüfung der Formmassen aus den Zusammensetzungen

Das Mischen der Komponenten erfolgte auf einem Zweiwellenextruder ZSK-26 Mc18 der Fa. Coperion bei einer Massetemperatur von 250 °C - 280 °C. Die Formkörper wurden bei einer Massetemperatur von 270 °C und einer Werkzeugtemperatur von 70°C auf einer Spritzgießmaschine Typ Arburg 270 E hergestellt.

Die IZOD-Schlagzähigkeit wurde bestimmt bei Raumtemperatur an Prüfstäben der Dimension von 80 mm x 10 mm x 4 mm gemäß ISO 180-U (Version von 2019).

Die Vicat-Erweichungstemperatur wurde gemessen gemäß DIN ISO 306 (Verfahren B mit 50 N Belastung und einer Heizrate von 120 K/h, Version von 2013) an einem einseitig angespritzten Prüfstab der Dimension 80x10x4 mm.

Die Flammwidrigkeit wurde gemäß UL94V an Stäben der Abmessung 127 x 12,7 x 1,5 mm beurteilt.

Die Kriechstromfestigkeit wurde für die hier beschriebenen Zusammensetzungen nach der Schnellprüfmethode in Anlehnung an die IEC 60112:2009 geprüft. Hierzu wurde eine 0,1%-ige Ammoniumchlorid Prüflösung (395 Ohm*cm Widerstand) tropfenweise zwischen zwei mit einem Abstand von 4 mm benachbarten Elektroden auf die Oberfläche von Prüfkörpern der Maße 60 mm x 40 mm x 4 mm im zeitlichen Abstand von 30s appliziert. Zwischen den Elektroden lag eine Prüfspannung an, die im Verlauf des Tests variiert wurde. Der erste Prüfkörper wurde bei einer Startspannung von 300 V bzw. 350 V getestet. Es wurden insgesamt maximal 50 Tropfen (ein Tropfen alle 30s) pro Spannung appliziert, so lange kein Kriechstrom > 0,5A über 2s auftrat oder die Probe gebrannt hat. Nach 50 Tropfen wurde die Spannung um 50 V erhöht und ein neuer Prüfkörper bei dieser höheren Spannung, gemäß dem zuvor beschriebenen Vorgehen, getestet. Dieser Prozess wurde so lange fortgesetzt, bis entweder 600 V erreicht waren oder ein Kriechstrom bzw. Brand auftrat. Sollte es bereits bei weniger als 50 Tropfen zu einem der zuvor genannten Effekte gekommen sein, wurde die Spannung um 25 V reduziert und ein neuer Prüfkörper bei dieser niedrigeren Spannung getestet. Die Spannung wurde so lange reduziert, bis der Test mit 50 Tropfen ohne Kriechstrom oder Brand bestanden wurde. Mit diesem Prozedere wurde also die maximal mögliche Spannung ermittelt, bei der eine Zusammensetzung 50 Tropfen der Prüflösung ohne Auftreten eines Kriechstroms widerstehen konnte. Abschließend wurden bei der ermittelten Maximalspannung zur Bestätigung vier weitere Prüfkörper mit jeweils 50 Tropfen getestet. Dieser bestätigte Wert wird in den Beispielen als CTI angegeben. Ein 100 Tropfen-Wert wurde nicht ermittelt, daher "Schnellprüfmethode in Anlehnung" an genannte Norm.

**Tabelle 1:**

| Erfindungsgemäße Zusammensetzungen und ihre Eigenschaften | | | | |
|---|---|---|---|---|
| **Komponenten [Gew.-%]** | **1 1504-A** | **2 1504-B** | **3 1506-A** | **4 1506-B** |
| A-1 | 84,28 | 79,28 | 80,28 | 75,28 |
| A-2 | 5,00 | 5,00 | 5,00 | 5,00 |
| B | 5,00 | 10,00 | 5,00 | 10,00 |
| C | 4,00 | 4,00 | 8,00 | 8,00 |
| D-1 (PETS) | 0,6 | 0,6 | 0,6 | 0,6 |
| D-2 (Irgafos P-EPQ) | 0,1 | 0,1 | 0,1 | 0,1 |
| D-3 (Irganox 1076) | 0,2 | 0,2 | 0,2 | 0,2 |
| D-4 (PTFE/SAN Masterbatch) | 0,8 | 0,8 | 0,8 | 0,8 |
| D-5 (Phosphorige Säure) | 0,02 | 0,02 | 0,02 | 0,02 |
| Verhältnis B/Phosphor | 14 | 28 | 7 | 14 |
| **Eigenschaften** | | | | |
| Izod-Schlagzähigkeit [kJ/m$^2$] | k. b. | k. b. | k. b. | k. b. |
| Vicat-Erweichungstemperatur [°C] | 121 | 118 | 110 | 107 |
| Flammwidrigkeit nach UL94 V bei 1,5 mm | V-0 | V-0 | V-0 | V-0 |
| Kriechstromfestigkeit [V] | 600 | 600 | 600 | 600 |
| k.b. bedeutet "kein Bruch" | | | | |

Die Daten aus Tabelle 1 zeigen, dass Probekörper aus den erfindungsgemäßen Zusammensetzungen einen hohen CTI, sehr gute Flammwidrigkeit sowie hohe Wärmeformbeständigkeit und Schlagzähigkeit ausweisen

**Tabelle 2:**

| Nicht erfindungsgemäße Zusammensetzungen und ihre Eigenschaften | | | | | |
|---|---|---|---|---|---|
| **Komponenten [Gew.-%]** | **V5 1504-D** | **V6 1506-D** | **V7 1503-A** | **V8 1503-B** | **V9 1503-D** |
| A-1 | 59,28 | 55,28 | 76,28 | 71,28 | 51,28 |
| A-2 | 5,00 | 5,00 | 5,00 | 5,00 | 5,00 |
| B | 30,00 | 30,00 | 5,00 | 10,00 | 30,00 |
| C | 4,00 | 8,00 | 12,00 | 12,00 | 12,00 |
| D-1 (PETS) | 0,6 | 0,6 | 0,6 | 0,6 | 0,6 |
| D-2 (Irgafos P-EPQ) | 0,1 | 0,1 | 0,1 | 0,1 | 0,1 |
| D-3 (Irganox 1076) | 0,2 | 0,2 | 0,2 | 0,2 | 0,2 |
| D-4 (PTFE/SAN Masterbatch) | 0,8 | 0,8 | 0,8 | 0,8 | 0,8 |
| D-5 (Phosphorige Säure) | 0,02 | 0,02 | 0,02 | 0,02 | 0,02 |
| Verhältnis B/Phosphor | 84 | 42 | 5 | 9 | 28 |
| **Eigenschaften** | | | | | |
| Izod-Schlagzähigkeit [kJ/m$^2$] | k. b. | 244 | 151 | 143 | 137 |
| Vicat-Erweichungstemperatur [°C] | 106 | 95 | 102 | 100 | 89 |
| Flammwidrigkeit nach UL94 V bei 1,5 mm | V-2 | V-2 | V-0 | V-0 | V-0 |
| Kriechstromfestigkeit [V] | 600 | 600 | 275 | 300 | 375 |
| k.b. bedeutet "kein Bruch" | | | | | |

Die Daten aus Tabelle 2 zeigen, dass Probekörper aus den nicht erfindungsgemäßen Zusammensetzungen die gewünschten Eigenschaften nicht erreichen. Ist der Anteil der Komponente B zu hoch wie in V5 und V6, so lässt sich die erforderliche Flammwidrigkeit nicht erreichen, selbst mit einer erhöhten Menge an Komponente C nicht. In diesem Fall (V6) ist zusätzlich die Wärmeformbeständigkeit verringert. Wird der Anteil der Komponente C noch weiter erhöht, so kann zwar die Flammwidrigkeit wieder verbessert werden (V9), aber die Wärmeformbeständigkeit ist sehr niedrig. Zudem ist die Kriechstromfestigkeit (CTI) nicht mehr ausreichend. Eine niedrige Kriechstromfestigkeit zeigen ebenfalls die Beispiele V7 und V8, bei denen der Anteil der Komponente C auch zu hoch ist. Weiterhin weisen alle Beispiele mit zu hohem Anteil an Komponente C eine unzureichende Schlagzähigkeit auf, d.h. es wird jeweils ein Bruch beobachtet (V7, V8 und V9).

## Patentansprüche

1. Zusammensetzung enthaltend

   A) 60 bis 93 Gew.-% mindestens eines aromatisches Polycarbonats, Polyestercarbonats oder Mischungen daraus,
   B) 2 bis 20 Gew.-%, eines Polyesters basierend auf mindestens einer aromatischen oder mindestens einer cycloaliphatischen Dicarbonsäure oder Mischungen daraus und Cyclohexandimethanol und optional mindestens einem weiteren aliphatischen Diol,
   C) 1 bis 10 Gew.-% mindestens eines phosphorhaltiges Flammschutzmittel.

2. Zusammensetzung gemäß Anspruch 1, **dadurch gekennzeichnet, dass** die Komponente B ein amorpher Polyester ist.

3. Zusammensetzung gemäß Anspruch 1 oder 2, **dadurch gekennzeichnet, dass** das Verhältnis des Gewichtsanteils der Komponente B in der Zusammensetzung zum Gewichtsanteil an Phosphor in der Zusammensetzung kleiner 40, bevorzugt größer 5 bis kleiner 40, ist

4. Zusammensetzung gemäß einem der vorhergehenden Ansprüche, **dadurch gekennzeichnet, dass** die Komponente B ein Polyester basierend auf Terephthalsäure sowie Cyclohexandimethanol und Ethylenglykol ist.

5. Zusammensetzung gemäß Anspruch 4, **dadurch gekennzeichnet, dass** das molare Verhältnis von Cyclohexandimethanol zu Ethylenglykol 40:60 bis 80:20 ist.

6. Zusammensetzung gemäß einer der vorhergehenden Ansprüche, **dadurch gekennzeichnet, dass** die Komponente B auf einer Mischung von Cyclohexandimethanol, Ethylenglykol und Isosorbid als Diolkomponente basiert.

7. Zusammensetzung gemäß einem der vorhergehenden Ansprüche, **dadurch gekennzeichnet, dass** die Komponente C ausgewählt ist aus der Gruppe bestehend aus mono- und oligomeren Phosphor- und Phosphonsäureester, Phosphazenen sowie Mischungen dieser Verbindungen.

8. Zusammensetzung gemäß einem der vorhergehenden Ansprüche, **dadurch gekennzeichnet, dass** als Komponente C eine Verbindung der allgemeinen Formel (4) eingesetzt wird

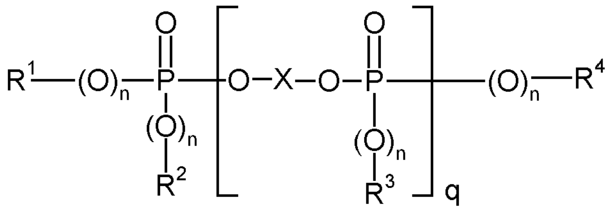

(4)

worin

$R^1$, $R^2$, $R^3$ und $R^4$, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

9. Zusammensetzung gemäß einem der vorhergehenden Ansprüche, enthaltend

65 bis 90 Gew.-% der Komponente A
3 bis 18 Gew.-% der Komponente B
2 bis 9 Gew.-% der Komponente C.

10. Zusammensetzung gemäß einem der vorhergehenden Ansprüche weiterhin enthaltend als Komponente D 0,1 bis 20 Gew.-% mindestens eines Polymeradditivs aus der Gruppe bestehend aus Antidrippingmitteln, Flammschutzsynergisten, Rauchinhibitoren, Gleit- und Entformungsmitteln, Nukleiermitteln, Antistatika, Leitfähigkeitsadditiven, Stabilisatoren, Fließfähigkeitspromotoren, Füll- und Verstärkungsstoffen, Phasenverträglichkeitsvermittlern, Schlagzähigkeitsmodifikatorenweiteren von den Komponenten A und B verschiedenen polymeren Bestandteilen sowie Farbstoffen und Pigmenten.

11. Zusammensetzung gemäß Anspruch 10, wobei die Zusammensetzung als Komponente D mindestens ein Pfropfpolymerisat mit Kern-Schale Struktur und/oder kautschukfreies Vinyl(co)poylmerisat in einer Menge von zusammen 1 bis 10 Gew.-% enthält.

12. Verwendung von 2 bis 20 Gew.-% eines Polyesters basierend auf einer aromatischen oder cycloaliphatischen Dicarbonsäure oder Mischungen daraus und Cyclohexandimethanol und optional einem weiteren aliphatischen Diol und 1 bis 10 Gew.-% mindestens eines phosphorhaltiges Flammschutzmittels zur Verbesserung des CTI bestimmt wie in der Beschreibung definiert und der Flammwidrigkeit nach UL 94 V von Polycarbonat-Zusammensetzungen.

13. Verwendung gemäß Anspruch 12, wobei ein CTI von 600 V bestimmt wie in der Beschreibung definiert sowie eine UL 94 V0-Klassifizierung bei einer Probenkörperdicke von 1,5 mm von Polycarbonat-Zusammensetzungen enthaltend 60 bis 93 Gew.-% Polycarbonat erzielt wird.

**14.** Bauteil

umfassend
einen ersten elektrischen Leiter L1 und einen zweiten elektrischen Leiter L2 in einem ersten Abstand d1 und einem zweiten Abstand d2 zueinander,
welche über ein thermoplastisches Material M, das in direktem Kontakt mit dem ersten elektrischen Leiter und der zweiten elektrischen Leiter steht, verbunden sind,
wobei der Abstand d1 die kürzeste Strecke zwischen dem ersten elektrischen Leiter und dem zweiten elektrischen Leiter entlang der Oberfläche des thermoplastischen Materials M ist und
wobei der Abstand d2 die kürzeste Strecke zwischen dem ersten elektrischen Leiter und dem zweiten elektrischen Leiter durch die Luft ist
wobei d2 so ausgewählt ist, dass bei der jeweiligen Betriebsspannung U für das Bauteil ein Überschlag durch die Luft verhindert wird,
wobei d1 bei der nachfolgend aufgelisteten Betriebsspannung U folgende Werte hat:

$$d1(0V \leq U \leq 250V)\text{: } 1{,}3 \text{ mm bis} < 2{,}5 \text{ mm}$$

$$d1(250\ V < U \leq 500\ V) = 2{,}5 \text{ mm bis} < 5{,}0 \text{ mm}$$

$$d1(500\ V < U \leq 1000\ V) = 5{,}0 \text{ mm bis} < 10{,}0 \text{ mm}$$

und wobei das thermoplastische Material M folgende Komponenten umfasst

A) 60 bis 93 Gew.-% mindestens eines aromatisches Polycarbonats, Polyestercarbonats oder Mischungen daraus,
B) 2 bis 20 Gew.-%, eines Polyesters basierend auf einer aromatischen oder cycloaliphatischen Dicarbonsäure oder Mischungen daraus und Cyclohexandimethanol und optional einem weiteren aliphatischen Diol,
C) 1 bis 10 Gew.-% mindestens eines phosphorhaltiges Flammschutzmittels.

**15.** Bauteil gemäß Anspruch 14, wobei das Bauteil nach ISO 20653:2013 eine Schutzart von IP6K9K aufweist und wobei d1 bei den nachfolgend aufgelisteten Betriebsspannungen U folgende Werte aufweist :

$$d1(0V \leq U \leq 250V)\text{: } 1{,}3 \text{ mm bis} < 2{,}5 \text{ mm}$$

$$d1(250\ V < U \leq 500\ V) = 2{,}5 \text{ mm bis} < 5{,}0 \text{ mm}$$

$$d1(500\ V < U \leq 1000\ V) = 5{,}0 \text{ mm bis} < 10{,}0 \text{ mm.}$$

## Claims

**1.** Composition comprising

A) 60% to 93% by weight of at least one aromatic polycarbonate, polyestercarbonate or mixtures thereof,
B) 2% to 20% by weight of a polyester based on at least one aromatic or at least one cycloaliphatic dicarboxylic acid or mixtures thereof and cyclohexanedimethanol and optionally at least one further aliphatic diol,
C) 1% to 10% by weight of at least one phosphorus-containing flame retardant.

**2.** Composition according to Claim 1, **characterized in that** component B is an amorphous polyester.

**3.** Composition according to Claim 1 or 2, **characterized in that** the ratio of the proportion by weight of component B in the composition to the proportion by weight of phosphorus in the composition is less than 40, preferably greater than 5 to less than 40.

**4.** Composition according to any of the preceding claims, **characterized in that** component B is a polyester based on

terephthalic acid and cyclohexanedimethanol and ethylene glycol.

**5.** Composition according to Claim 4, **characterized in that** the molar ratio of cyclohexanedimethanol to ethylene glycol is 40:60 to 80:20.

**6.** Composition according to any of the preceding claims, **characterized in that** component B is based on a mixture of cyclohexanedimethanol, ethylene glycol and isosorbide as diol component.

**7.** Composition according to any of the preceding claims, **characterized in that** component C is selected from the group consisting of mono- and oligomeric phosphoric and phosphonic esters, phosphazenes and mixtures of these compounds.

**8.** Composition according to any of the preceding claims, **characterized in that** used as component C is a compound of the general formula (4)

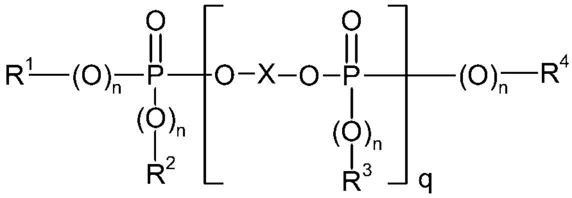

(4)

in which
$R^1$, $R^2$, $R^3$ and $R^4$ are each independently optionally halogenated C1- to C8-alkyl, in each case optionally alkyl-substituted, preferably C1- to C4-alkyl-substituted, and/or halogen-substituted, preferably chlorine- or bromine-substituted, C5- to C6-cycloalkyl, C6- to C20-aryl or C7- to C12-aralkyl,
n is independently 0 or 1,
q is 0 to 30 and
X is a mono- or polycyclic aromatic radical having 6 to 30 carbon atoms, or a linear or branched aliphatic radical having 2 to 30 carbon atoms, which may be OH-substituted and may contain up to 8 ether bonds.

**9.** Composition according to any of the preceding claims, comprising

65% to 90% by weight of component A
3% to 18% by weight of component B
2% to 9% by weight of component C.

**10.** Composition according to any of the preceding claims, further comprising, as component D, 0.1% to 20% by weight of at least one polymer additive from the group consisting of anti-drip agents, flame retardant synergists, smoke inhibitors, lubricants and mould-release agents, nucleating agents, antistats, conductivity additives, stabilizers, flow promoters, fillers and reinforcers, phase compatibilizers, impact modifiers, further polymeric constituents different from components A and B, and dyes and pigments.

**11.** Composition according to Claim 10, wherein the composition comprises, as component D, at least one graft polymer with core-shell structure and/or rubber-free vinyl (co)polymer in an amount of together 1% to 10% by weight.

**12.** Use of 2% to 20% by weight of a polyester based on an aromatic or cycloaliphatic dicarboxylic acid or mixtures thereof and cyclohexanedimethanol and optionally a further aliphatic diol and 1% to 10% by weight of at least one phosphorus-containing flame retardant for improving the CTI determined as defined in the description and the flame retardancy according to UL 94 V of polycarbonate compositions.

**13.** Use according to Claim 12, wherein a CTI of 600 V determined as defined in the description and a UL 94 V0 classification at a test specimen thickness of 1.5 mm of polycarbonate compositions comprising 60% to 93% by weight of polycarbonate is attained.

**14.** Component comprising a first electrical conductor L1 and a second electrical conductor L2 at a first distance d1 and a second distance d2 with respect to one another,

which are connected via a thermoplastic material M which is in direct contact with the first electrical conductor and the second electrical conductor,
wherein the distance d1 is the shortest distance between the first electrical conductor and the second electrical conductor along the surface of the thermoplastic material M and
wherein the distance d2 is the shortest distance between the first electrical conductor and the second electrical conductor through the air,
wherein d2 is selected in such a way that at the respective operating voltage U for the component a sparkover through the air is prevented,
wherein d1, at the operating voltage U listed below, has the following values:

$$d1(0\ V \leq U \leq 250\ V):\ 1.3\ mm\ to < 2.5\ mm$$

$$d1(250\ V < U \leq 500\ V) = 2.5\ mm\ to < 5.0\ mm$$

$$d1(500\ V < U \leq 1000\ V) = 5.0\ mm\ to < 10.0\ mm$$

and wherein the thermoplastic material M comprises the following components

A) 60% to 93% by weight of at least one aromatic polycarbonate, polyestercarbonate or mixtures thereof,
B) 2% to 20% by weight of a polyester based on an aromatic or cycloaliphatic dicarboxylic acid or mixtures thereof and cyclohexanedimethanol and optionally a further aliphatic diol,
C) 1% to 10% by weight of at least one phosphorus-containing flame retardant.

**15.** Component according to Claim 14, wherein the component has an IP6K9K degree of protection according to ISO 20653:2013 and wherein d1, at the operating voltages U listed below, has the following values:

$$d1(0\ V \leq U \leq 250\ V):\ 1.3\ mm\ to < 2.5\ mm$$

$$d1(250\ V < U \leq 500\ V) = 2.5\ mm\ to < 5.0\ mm$$

$$d1(500\ V < U \leq 1000\ V) = 5.0\ mm\ to < 10.0\ mm.$$

**Revendications**

**1.** Composition contenant

A) 60 à 93% en poids d'au moins un polycarbonate aromatique, un polyestercarbonate aromatique ou de leurs mélanges,
B) 2 à 20 % en poids d'un polyester à base d'au moins un acide dicarboxylique aromatique ou d'au moins un acide dicarboxylique cycloaliphatique ou de leurs mélanges et de cyclohexanediméthanol et, facultativement, d'au moins un autre diol aliphatique ;
C) 1 à 10% en poids d'au moins un agent ignifuge contenant du phosphore.

**2.** Composition selon la revendication 1, **caractérisée en ce que** le constituant B est un polyester amorphe.

**3.** Composition selon la revendication 1 ou 2, **caractérisée en ce que** le rapport entre le poids du constituant B dans la composition et le poids du phosphore dans la composition est inférieur à 40, de préférence supérieur à 5 ou inférieur à 40.

**4.** Composition selon l'une quelconque des revendications précédentes, **caractérisée en ce que** le constituant B est un polyester à base d'acide téréphtalique, ainsi que le cyclohexanediméthanol et l'éthylène glycol.

**5.** Composition selon la revendication 4, **caractérisée en ce que** le rapport molaire du cyclohexanediméthanol à l'éthylène glycol est de 40:60 à 80:20.

**6.** Composition selon l'une quelconque des revendications précédentes, **caractérisée en ce que** le constituant B est à base d'un mélange de cyclohexanediméthanol, d'éthylène glycol et d'isosorbide en tant que constituant diol.

**7.** Composition selon l'une quelconque des revendications précédentes, **caractérisée en ce que** le constituant C est choisi dans le groupe constitué des esters monomères et oligomères de l'acide phosphorique et phosphonique, des phosphazènes ainsi que de mélanges de ces constitués.

**8.** Composition selon l'une quelconque des revendications précédentes, **caractérisée en ce qu'**on utilise comme constituant C un composé de formule générale (4)

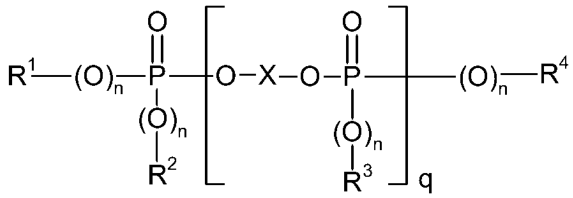

(4)

où

$R^1$, $R^2$, $R^3$ et $R^4$ signifient, indépendamment les uns des autres, C1 à C8-alkyle à chaque fois le cas échéant halogéné, C5 à C6-cycloalkyle, C6 à C20- aryle ou C7 à C12-aralkyle, à chaque fois le cas échéant substitué par alkyle, de préférence C1 à C4-alkyle, et/ou par halogène, de préférence chlore, brome,
n indépendamment l'un de l'autre, valent 0 ou 1
q vaut 0 à 30 et
X signifie un radical aromatique à un ou plusieurs noyaux comprenant 6 à 30 atomes de carbone ou un radical aliphatique linéaire ou ramifié comprenant 2 à 30 atomes de carbone, qui peut être substitué par OH et contenir jusqu'à 8 liaisons éther.

**9.** Composition selon l'une quelconque des revendications précédentes, contenant

de 65 à 90 % en poids du constituant A,
de 3 à 18 % en poids du constituant B,
de 2 à 9 % en poids du constituant C.

**10.** Composition selon l'une quelconque des revendications précédentes, contenant en outre comme constituant D de 0,1 à 20 % en poids d'au moins un additif polymère du groupe constitué d'agents anti-goutte, de synergistes d'ignifugation, d'inhibiteurs de fumée, d'agents lubrifiants et de démoulage, d'agents de nucléation, d'antistatiques, d'additifs de conductivité, de stabilisateurs, de promoteurs de fluidité, de matériaux de charge et de renforcement, d'agents de compatibilité de phase, de modificateurs de résistance aux chocs autres que les constituants A et B, divers constituants polymères, colorants et pigments.

**11.** Composition selon la revendication 10, la composition contenant comme constituant D au moins un polymérisat greffé ayant une structure de type noyau/enveloppe et/ou un (co)poylmérisat de vinyle sans caoutchouc en une quantité totale de 1 à 10 % p/p.

**12.** Utilisation de 2 à 20 % en poids d'un polyester à base d'acide dicarboxylique aromatique ou cycloaliphatique ou de leurs mélanges et de cyclohexanediméthanol et facultativement d'un autre diol aliphatique et de 1 à 10 % en poids d'au moins un agent ignifuge contenant du phosphore pour améliorer le CTI tel que défini dans la description et l'ignifugation selon UL 94 V de compositions de polycarbonate.

**13.** Utilisation selon la revendication 12, une valeur CTI de 600 V, déterminée comme défini dans la description ainsi qu'une classification UL 94 V0, pour une épaisseur d'éprouvette de 1,5 mm, de compositions de polycarbonate contenant 60 à 93 % en poids de polycarbonate étant obtenues.

**14.** Composant comprenant un premier conducteur électrique L1 et un second conducteur électrique L2 à une première distance d1 et à une seconde distance d2 l'un de l'autre,

qui sont reliés par l'intermédiaire d'un matériau thermoplastique M qui est en contact direct avec le premier conducteur électrique et le second conducteur électrique,
la distance d1 étant le chemin le plus court entre le premier conducteur électrique et le second conducteur électrique le long de la surface du matériau thermoplastique M et
la distance d2 étant le chemin le plus court entre le premier conducteur électrique et le second conducteur électrique à travers l'air et
d2 étant choisi de telle sorte qu'à la tension de fonctionnement U respective pour l'élément, un contournement par l'air est évité,
d1 présentant les valeurs suivantes lors de la tension de fonctionnement U reprise dans la liste ci-dessous :

$$d1(0\ V \leq U \leq 250\ V) : 1{,}3\ mm\ à < 2{,}5\ mm$$

$$d1(250\ V < U \leq 500\ V) = 2{,}5\ mm\ à < 5{,}0\ mm$$

$$d1(500\ V < U \leq 1000\ V) = 5{,}0\ mm\ à < 10{,}0\ mm$$

et le matériau thermoplastique M comprenant les constituants suivants :

A) 60 à 93% en poids d'au moins un polycarbonate aromatique, un polyestercarbonate aromatique ou de leurs mélanges,
B) 2 à 20 % en poids d'un polyester à base d'un acide dicarboxylique aromatique ou cycloaliphatique ou de leurs mélanges et de cyclohexanediméthanol et, facultativement, d'un autre diol aliphatique,
C) 1 à 10% en poids d'au moins un agent ignifuge contenant du phosphore.

**15.** Composant selon la revendication 14, le composant ayant un indice de protection IP6K9K selon la norme ISO 20653:2013 et d1 présentant les valeurs suivantes pour les tensions de fonctionnement U énumérées ci-dessous :

$$d1(0\ V \leq U \leq 250\ V) : 1{,}3\ mm\ à < 2{,}5\ mm$$

$$d1(250\ V < U \leq 500\ V) = 2{,}5\ mm\ à < 5{,}0\ mm$$

$$d1(500\ V < U \leq 1000\ V) = 5{,}0\ mm\ à < 10{,}0\ mm.$$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2007197722 A1
- US 2012231278 A
- EP 3560997 A2
- US 20120248384 A1
- DE 1495626 A
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- EP 363608 A
- EP 640655 A
- EP 728811 A
- DE 1961668 A
- WO 9740092 A


### In der Beschreibung aufgeführte Nicht-Patentliteratur


- *Polymer Degradation and Stability*, December 2011, vol. 96 (12), 2098-2103
- **SCHNELL**. Chemistry and Physics of Polycarbonates. Interscience Publishers, 1964
- **J. SCHEIRS** ; **T.E. LONG**. Modem Polyesters: Chemistry and Technology of Polyesters and Copolyesters. John Wiley & Sons, 2003
- **ULLMANNS**. *Enzyklopädie der technischen Chemie*, 1979, vol. 18, 301
- **HOUBEN-WEYL**. *Methoden der organischen Chemie*, vol. 12/1, 43
- *Beilstein*, vol. 6, 177